# EUROPEAN PATENT APPLICATION

(11) **EP 1 030 524 A1**
(43) Date of publication of application: **23.08.2000**
(21) Application number: 99440032.3
(22) Date of filing: 19.02.1999
(51) Int. Cl.: H04N 7/26

(54) **Method for encoding a digital image and coder**

(71) Applicant: ALCATEL, 75008 Paris (FR)
(72) Inventor: Schuster Brigitte, 67560 Rosheim (FR)
(74) Representative: Rausch, Gabriele, Dr.

(57) **Abstract**

The invention describes a method for coding residue data that are separated from a highly compressed base layer of data by taking a difference between the original and the reconstructed data signal using the residual signal with N bits in binary format and form N bit-planes within the bit planes are sorted a defined criteria.

## Description

The present invention is related to the field of digital image processing and more particularly to a method for decoding and / or encoding digital images.

The storage of compressed streams of data and their transmission over heterogeneous and packed-based networks to end users connected with various physical links is greatly alleviated when the stream is scaleable temporary, spatially and qualitatively for video streams and qualitatively for voice or audio streams. Assuming these streams fulfill the later properties the problem consists in building hierarchical flows of packets such as each element of the whole transmission chain can first identify this hierarchy and secondly decide which flow of packets of which single packet can be neglected without compromising the global quality of the service. The quality of the service at each end user is in that case independent from the others There is a strong link between the structure of the bit stream, the coding algorithm and the packetization process. The problem is building the optimal hierarchy for data packets.

The invention gives a solution with a method for coding residue data that are separated from a highly compressed base layer of data by taking a reference from the original and reconstructed coefficients of a mathematical transformation of data, , using the residue signal with N bits in binary format and form N bit-planes, characterized in that the bit planes are sorted by a defined criteria. Every kind of mathematical transformation can be used as e.a. a discrete cosine transform, a discrete wavelet transform or fast Fourier transform.

An example is shown in the figures and described in the following description.
Fig. 1 shows the taking of residue between original and lower boundary point of quantization bin
Fig. 2 Scheme of coding
Fig. 3 Bit planes
Fig. 4 Application example
Fig. 5 Bit-plane coder.

Qualitative capable streams are usually structured into a base layer and at least one enhancement layer. This is for example known from the proposals for a MPEG-4 Standard published Dec. 1998 "Coding of moving pictures and associated audio" in the Internet. The related coding scheme produces a highly compressed base layer which is known in the proposal as visual IS layer. The residual information is used to produce either several enhancement layers or only one progressive enhancement layer. In this paper a method of "Fine Granularity Scalability" FGS for natural video signals is proposed which includes a description of the syntax and encoding/ decoding procedures for this layer. In this paper a coding scheme for bit plane encoding is proposed ordering the bit-planes in bit-plane from the most significant bit (MSB) to the bit-plane of the less significant bit LSB).

The task of the invention is to use the same bandwidth to optimize the signal to noise ratio of the transmitted data and the quality of the signal. To solve this problem the bit-plane coding scheme is modified so that a statistic table is built up to give a different order of a bit-planes for getting better quality at the same bandwidth of transmission. The inventional proposal has the advantage that for the same bandwidth the quality of the information is enhanced. The method can easily be implemented as a function in the network independent from the coder itself. Following the MPEG 2 Standard which is related to the ISO/IEC 13818 Standard a special algorithm is defined which only fixes the syntax and the semantic of the bit stream and in particular the functional elements of the decoder. The basis of the coding is a hierarchy in form of six layers: sequence layer, group of pictures layer, picture layer, slice layer, macroblock layer and block layer. A MPEG 2 image is coded first by a block transformation and a quantization using a discrete cosinus transformation scheme for the transformation. Afterwards a run length coding and a variable length coding simplifies the data to transmit. MPEG 2 uses no bit-plane sorting method. The bit-plane coding takes place after the quantization step but adding the computation of the residual data. On the encoder side the coding technique includes the following operations:
Taking a residue between the original DCT coefficient and a reference point determined by a quantized DCT coefficient.
Bit-plane encoding of the absolute value of the residual signal.

Selective encoding of the signs of the residue signal.

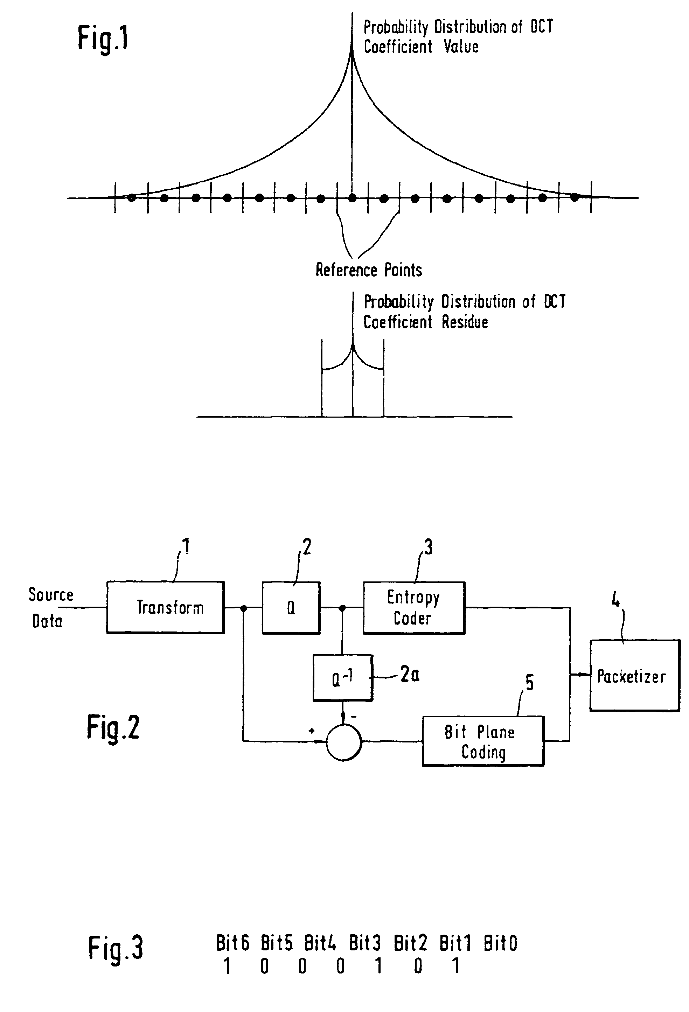

For taking the residue the reference mode method is taken. In the reference method the difference between the original and the lower boundary point of the quantization bin except the 0 bin as shown in Fig. 1 is taken. In the reference method the residue from the positive side remains positive and the residue from the negative side remains negative, taking the residue is equivalent to moving the origin to the reference point. Therefore the probability of the residue becomes the one shown in the lower half of Fig. 1 which preserves the shape of the original non uniform distribution. The bit-plane coding is started for the residual information which is divided from the basis data stream.

Fig. 2 shows a scheme of the data stream of a source data, e.a. a 8 x 8 matrix which is transformed by a discrete cosinus transformation DCT then quantisized in a quantisizer 2 and coded by entropy encoder 3, e.g. run length coding RLC and a variable length coding VLC. The basis data layer is packetized in a packetizer. The residual information which is divided from the main stream after the discrete cosinus transformation 2 is connected to a inverse quantisizer 2a and then handled in a bit-plane coding scheme. The result is sent to the packetizer, too.
The packetiser is not mandatory for the inventional coding scheme. After taking residues of all DCT- coefficient in a 8 x 8 block bit-plane is used to code the absolute values of the residue. The major conceptual difference between the bit coding method and run length coding method is that bit-plane coding method considers each absolute residue value as a binary number of several bits instead of a decimal integer of a certain value. The 64 absolute values of the residue signal are ordered into a one dimensional array. The bit-plane coding method can be described as a following procedure: Find the maximum value of all the absolute values of the residue signals in a VOP (Video Object Plane) and find the minimum number of bit N needed to represent this maximum value in the binary format. N is the number of bit-planes for this Video Object Plane and is coded in the VOP header of the enhancement layer. Within each 8 x 8 block represent every one of the 64 absolute values of the residue signal with N bits in the binary format and form N bit-planes. The bit-plane is defined as an array of 64 bits taking one from each absolute value of the residue of the same significant position. Starting from a bit-plane which have a highly statistical probability two dimensional symbols are formed of two components
a) number of consecutive 0 before a 1 this is RUN
b) whether there are any 1's left on this bit-plane e.g. end of plane EOP.
If a bit-plane after the most significant plane contains all zeros a special symbol or zero is formed to represent an all zero bit-plane. Two-dimensional VLC-tables are used to transform the planes to a code-word. In the bit-plane coding each bit-plane of the residual samples in a block are coded one after the other.

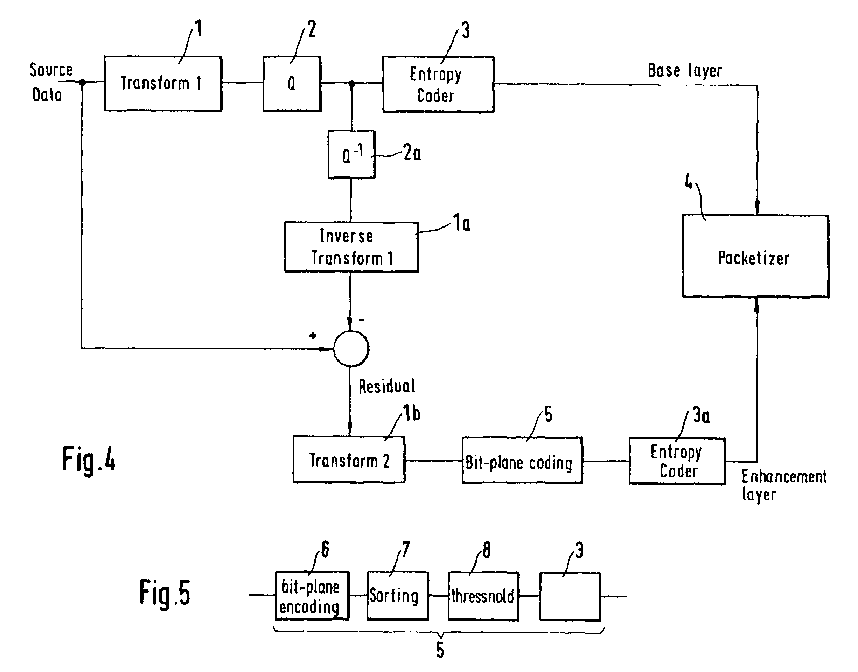

Bit-planes of a sample which is seen in Fig. 3 have the value 69. Bit 6 is the most significant bit and bit 0 is the less significant bit. Usually we say that the most significant bit is more important than the less significant bit. So usually the highest priority is given to the most significant bit MSB. Now we have to see the statistical probability to have a 1 in the bit 6 plane for the whole video image point. The statistical probability is very low to get a 1 for the whole image. An analysis of some video sequences shows that when the MSB plane is missing, the visual degradation is not as high as proposed. Medium bits are more important, e.g. bit plane 2 for our Fig. 3. So the sorting of the bit-planes can be done in a different way not starting with the most significant bit but with a bit-plane of high statistical value. One method to have a different sorting criteria is to compute the peak signal to noise ratio (PSNR) of the reconstructed signal with a missing bitplane. So we get a statistical table that is built by the PSNR versus the bit-plane. The PSNR allows to sort the data in a specific way. From the less important PSNR to the most important PSNR very close values of this criteria cannot change the sorting scheme. It is possible to define a specific threshold for changes in the criteria to change the sorting scheme. After the sorting of the bit-planes each bit-plane is converted into symbols and coded using the VLC tables. Based on their locations in the bit-planes different VLC tables are used for coding the code-words. The further procedures are known from the publication of MPEG 4 "Coding of moving pictures and associated audio" Fig. 4 shows an encoder which is able to realize the inventional method. First a discrete cosinus transformation 1 is made by a special transformation means. The transformation means 1 is connected to a quantisizing means 2 and the quantisizing means 2 is connected to a encoder 3. The output of the encoder 3 is connected to the packatizer 4. The residual information of the transformation 1 is fed into a inverse quantisizer 2a and an inverse transformation 1a. The data stream of this transformation 1a is added to the original source stream to get the residual data stream. The residual data stream is transformed in a transformation 1 b and fed into a bit-plane coder 5. The output of the bit-plane coder is connected directly or over a entropy decoder 3a to the packatizer 4.

In fig. 5 the bit-plane coder 5 includes means for bit-plane encoding of the absolute values of the residue signal 6 sorting means for sorting bit-planes 7 after a special sorting scheme, and means for detecting 8 a necessary change in the sorting scheme using fixed threshold values. The bit plane coder 5 can enclude an entropy decoder 3.

The coding method is working for video, audio and voicedata streams. For the sorting of the bitplanes other criteria then that describes in the preferred embodiment are possible. The criteria must be defined by the best system performance.

## Claims

1. Method for coding residue data that are separated from a highly compressed base layer of data by taking a reference from the original and reconstructed coefficients of a mathematical transformation of data, using the residue signal with N bits in binary format and form N bit-planes, characterized in that the bit planes are sorted by a defined criteria.

2. Method for coding residue data that are separated from a highly compressed base layer of data by taking a reference from the original and reconstructed coefficients of a mathematical transformation of data, using the residue signal with N bits in binary format and form N bit-planes, characterized in that the bit planes are sorted by the peak signal to noise ratio of the reconstructed signal with a missing bitplane..

3. Method for coding according to claim 2, characterized in that the sorting of the bit-planes can be influenced by a predefined figure.

4. Method for coding according to claim 3, characterized in that the predefined figure changes if the changes in the statistically product over come a predefined threshold.

5. Coder for coding a data stream including transformation means 1, quantisizing means 2 and the quantisizing means 2 are connected to a encoder 3 encoding the data stream with a run length encoding and a variable length encoding, and connected o an output ,with feeding residual information of the transformation 1 into a bit-plane coder 5 that is connected to the output.

6. Coder according to claim 5 including a bit plane coder 5 with means for bit-plane encoding of the absolute values of the residue signal 6, sorting means for sorting bit-planes 7 after a special sorting scheme, and means for detecting 8 a necessary change in the sorting scheme using fixed threshold values.
